# EUROPEAN PATENT APPLICATION

(11) **EP 2 674 525 A1**
(43) Date of publication of application: **18.12.2013**
(21) Application number: 12172027.0
(22) Date of filing: 14.06.2012
(51) Int. Cl.: D06F 58/20

(54) **Apparatus comprising a heat pump system**

(71) Applicant: Electrolux Home Products Corporation N.V., 1130 Brussel (BE)
(72) Inventor: Cavarretta, Francesco, 33080 Porcia (PN) (IT); Vignocchi, Massimiliano, 33080 Porcia (PN) (IT); Zattin, Andrea, 33080 Porcia (PN) (IT)
(74) Representative: Nardoni, Andrea

(57) **Abstract**

The invention relates to an apparatus comprising a heat pump system (4) comprising: a first heat exchanger (12) for cooling a refrigerant fluid (R), a second heat exchanger (10) for heating the refrigerant fluid (R), an expansion device (16), a refrigerant loop (6), in which the refrigerant fluid is circulated through the first and second heat exchangers and the expansion device, and a compressor (14) for circulating the refrigerant fluid through the refrigerant loop. According to the invention the refrigerant fluid comprises particles (32) having a size of less than 10 micron, and/or the compressor is provided with a lubricating fluid, wherein the lubricating fluid comprises particles (32) having a size of less than 10 micron.

## Description

The invention relates to an apparatus comprising a heat pump system having a first heat exchanger for cooling a refrigerant fluid, and a second heat exchanger for heating the refrigerant fluid, an expansion device, a refrigerant loop, in which the refrigerant fluid is circulated through the first and second heat exchangers and the expansion device, and a compressor for circulating the refrigerant fluid through the refrigerant loop.

Heat pump technology is used in household appliances like tumble dryers and, at present, it seems to be the most energy efficient way to dry clothes. Integrating heat pump systems in home appliance is constantly in development with the perspective of optimization in details and improving in integration according to the need of the specific home appliance device and use.

It is an object of the invention to provide an apparatus comprising a heat pump system using a fluid, in particular a refrigerant fluid, in which the efficiency of the heat pump system is further increased.

The invention is defined in claims 1 and 16. Particular embodiments are set out in the dependent claims.

According to claim 1 an apparatus comprising a heat pump system comprises a first heat exchanger for cooling a refrigerant fluid, a second heat exchanger for heating the refrigerant fluid and an expansion device. In a refrigerant loop, the refrigerant fluid is circulated through the first and second heat exchangers and the expansion device. A compressor is provided for circulating the refrigerant fluid through the refrigerant loop.

According to the invention, the refrigerant fluid comprises particles having a size of less than 10 micron, and/or the compressor is provided with a lubricating fluid, wherein the lubricating fluid comprises particles having a size of less than 10 micron.

It is to be understood that the refrigerant fluid comprises a base fluid and particles added to the base fluid. The base fluid of the refrigerant fluid may be any refrigerant adapted to be used in the heat pump system. The particles are dispersed or are to be dispersed in the base fluid. E.g. the particles are dispersed at least partially in the base fluid at least when the heat pump system (the apparatus) is in an operating condition.

It is further to be understood that in case of the lubricating fluid, the lubricating fluid comprises a base fluid and particles added to the base fluid. The base fluid of the lubricant fluid may be any lubricant adapted to be used in or for the compressor. The particles are dispersed or are to be dispersed in the base fluid. E.g. the particles are dispersed at least partially in the base fluid at least when the compressor (the heat pump system/the apparatus) is in an operating condition.

The refrigerant and/or lubricating fluid including the particles may provide an increased heat conductivity as compared to the refrigerant and/or lubricating fluid without the particles. In addition or alternatively, the refrigerant and/or lubricating fluid including the particles provides a reduced friction coefficient as compared to the refrigerant and/or lubricating fluid without the particles.

Adding the particles to the fluid such that the heat conductivity is increased allows to reduce the size of the heat exchangers, the condenser and/or the evaporator as the heat flow from the fluid volume to the heat exchanging walls of the heat exchangers and/or compressor is increased. As a result the space requirement for the heat pump system in the apparatus (e.g. home appliance like a tumble dryer) is reduced. A compact overall layout or design of the heat pump system can be provided. This can for example be used to provide the apparatus with smaller outer total dimension or to provide more internal space in the apparatus cabinet for other components, for example an articles or laundry storing compartment or for providing a larger drum diameter in case of a rotatable drum. In case of increased heat conductivity and/or reduced friction (i.e. reduced viscosity) of the refrigerant fluid the pressure drop of the refrigerant fluid through the refrigerant piping loop of the heat pump system is reduced.

Further, an improved lifetime of the household appliance, especially heat pump system and of its components like its compressor will be achieved, in particular in case of the refrigerant and/or lubricating fluid having improved lubricating characteristic.

In an embodiment the particles have a size or have an average size of less than 2500 nm, less than 500 nm, or less than 100 nm. Additionally (in any combination mathematically being meaningful) or alternatively the particles can have a size or have an average size of at least or more than 0.1 nm, 1 nm, 10 nm or 100 nm. In other words, the particles are especially nano-particles. The dimension of the particles preferably but not necessarily is <100 nm (1 nm = 10⁻⁹ m). For example the particles added to the refrigerant fluid and/or lubricant fluid have a size in the range from 0.1 to 500 nm, 0.1 to 100 nm, 0.1 to 10 nm, 1 to 100 nm, 10 to 100 nm or 10 to 500 nm.

Where the lubricant fluid is lubricant oil it may be or may comprise at least one of the following: Mineral Oil (MO), Polyalphaolefins (PAO), Alkylbenzene (AB), Polyol Esters (POE), Paolyalkilene Glycols (PAG), Mineral naphtenic, Mineral paraffinic, Esters, Diesters, or a mixture of at least two of these lubricant oils.

Where the fluid is a heat exchange medium, in particular, the refrigerant fluid (R) is or comprises Hydrochlorofluorocarbons (HCFC), Chlorofluorocarbons (CFC), Hydrofluorocarbons (HFC), Hydro-fluoro-olefine (HFO), a tetra-fluoro-propene, 1,1,1,2-tetra-fluoro-propene, 1,1,1,3-tetra fluoro-propene, Ammonia, Carbon dioxide, Water, Glycols, Hydrocarbons, or a mixture of at least two of these refrigerant fluids.

In other words, technical characteristics of a wide range of refrigerant base fluids common as such can be used, into which such particles are inserted. Especially for household appliances like a heat pump tumble dryer application Hydrochlorofluorocarbons and Hydrofluorocarbons is widely used, i.e. R134A. Additionally hydro-fluoro-olefine can be used.

In a preferred embodiment, at least a portion or all of the particles are made of at least one of or comprise at least one of transition metal element, transition metal oxide, metal oxide, non-metal oxide, non-metal element, or a particle mixture thereof or are made of a compound material thereof. In other words, a plurality of different materials can be used to provide such particles. Such transition metal elements are e.g. Ti, Zr, Cu, Fe, Au, Ag, and Zn. Such transition metal oxides are e.g. CuO, TiO₂, Fe₂O3, NiO, metal oxide (Al₂O₃ etc), non-metal oxide is e.g. SiO₂, mixed transition metal oxide NiFe2O4 and combinations of the previous. Such non-metal elements are e.g. C as diamond form, C as graphite form, or Si.

At least a portion of the particles may be formed by at least one of or comprise at least one of Carbon derivates as carbide or fullerene. Such carbide and fullerene derivates are e.g. carbides, carbon nanotubes, and modified fullerene C60.

According to an embodiment the concentration of the particles in the refrigerant and/or lubricating fluid is equal to or less than 75%, 50%, 10%, 1 %, or 0.1%. These values can be expressed in % of the total weight or in % of the total volume. The concentration of the particles in the base fluids may be in a range from 0.05% to 50% (wt or of total volume). Preferably, the concentration of the particles in the refrigerant and/or lubricating fluid can be equal or greater than 0.05%, 0.1%, 1%, or 10%. These values can be expressed in % of the total weight or in % of the total volume. In particular these values (statistically) relate to a main part of the particles in the heat exchange medium - e.g. the values apply for at least 70%, 80%, 90% or 95% of the particles. A higher concentration or proportion of particles in the fluid gives better result in thermal exchange but could be detrimental for clogging effect of the heat pump system. Thus, in particular but not necessarily the concentration is strictly related to the system in use being especially base fluid and kind of the particles. For example the concentration in % of the total weight or of the total volume is in the range of 0.1 to 10 %, 0.1 to 5%, 0.1 to 2%, 0.01 to 5%, 0.01 to 2%, 0.01 to 0.5%, 0.05 to 5% or 0.05 to 1%.

In an embodiment the particles are dispersed in the refrigerant and/or lubricating fluid in a stable manner, or the particles are dispersed in the refrigerant and/or lubricating fluid such that the base fluid or the fluid with the particles is thixotropic or an emulsion. The stable manner can result in the particles as such or in the fluid surrounding the particles or in the mixture of both the fluid and the particles. Such way to disperse the particles into the fluid provides a high stability of the fluid/partcicles system. However, other solutions providing a mixture when starting the household appliance or during its running mode can be realized, too.

The apparatus may be operated using a process medium. The process medium may exchange heat with the refrigerant liquid, wherein the second heat exchanger is thermally coupled to the process medium for cooling down the process medium. In particular, such apparatus is adapted for air-conditioning or is adapted for refrigeration. Alternatively or additionally, the apparatus is operated using a process medium which exchanges heat with the refrigerant fluid, wherein the first heat exchanger is thermally coupled to the process medium for heating up the process medium. In particular, the first heat exchanger is designed to heat the process medium for treating items in a treatment chamber of the apparatus. For example, such apparatus can be a laundry machine or dishwasher.

The process medium used in the apparatus may be air, drying air, cooling air, water, washing liquid, laundry washing liquid, dishwasher liquid, and/or the first and second heat exchanger are arranged in a drying air loop. In particular, water may be water in a container for water heating or boiling.

According to an embodiments the apparatus is a refrigerator, an air conditioner, a dishwasher, a household appliance having drying function, a laundry treatment apparatus, a tumble dryer, a washing machine, a washer dryer, a heat pump system for recovery of process heat, or a heat pump system for heating a building.

According to a method of the invention particles are used in fluid, for example a fluid as set out in any single or any combination above. In particular particles are used in a heat exchange medium or in a refrigerant fluid, in a heat pump system of a household appliance, a refrigerator, an air conditioner, a tumble dryer, a washing machine, a dishwasher or a washer dryer. In particular any type of particles can be used if such particles are able to store and exchange heat and/or assist with lubricating effect.

Using particles in the refrigerant and/or lubricating fluid by adding the particles to a base fluid of the refrigerant fluid and lubricating fluid, respectively, provides novel properties that make them potentially useful in many applications, especially in heat transfer, thanks to the high thermal conductivity compared to the conductivity of the base fluids. In this way the heat transfer coefficient of the refrigerant is increased drastically.

The characteristic of the refrigerant and/or lubricating fluid having particles results from the peculiar properties of the particles. Generally particles having a size of less than 10 micron are characterized by the high ratio of surface versus volume. The inventors became aware that the high surface ratio gives new properties to the fluids like for example one or more of high thermal conductivity, high thermal exchange properties, stability, reduced viscosity, improved lubricant effect, optimized pH value, or reduced damaging of the mechanical part when acting as lubricant. Such properties may be introduced to the refrigerant and/or lubricating fluid by adding of the particles showing new characteristic over conventional refrigerant and lubricating fluids without particles, respectively.

As compared to conventional liquids, such formed fluids with particles of less than 10 micron are characterized by the kind of base fluids in which the particle are added, the shape and the size of the particles to be added, a concentration of particles added to the base fluid, the kind of the particles added to the base fluids and/or the properties resulting from the combination of the base fluid and the particles. It is to be understood that other particles, liquids and particle/liquid combinations than the above indicated can be used for providing the extended properties.

Preferably the fluids with the above mentioned particles are provides as colloidal suspensions of particles in a base fluid. The particles used are typically made of metals, metal oxides or carbon nanotubes. Common base fluids in particular include water, ethylene glycol, or different kind of synthetic refrigerants.

Preferably the type of base fluid and the particles type, minimum size, maximum size, size range material and/or volume% or total weight% of the fluid with particles is adapted/selected in dependency of the intended use, range or operation, compressor type, heat pump system and/or type of apparatus to provide optimized results. Generally speaking, fluids with metallic particles shows better results in heat conductivity as compared to those with oxide particles. The concentration can play a key role on the final characteristic of the fluids. The concentration is tailored based on the kind of base fluid and particles to be used. Low amount of particles, in particular few % weight unit, influence strongly the properties of the base fluids by drastically increasing of thermal properties and rheological properties.

In a further aspect of the invention a method is provided in which a refrigerant fluid or a lubricating fluid is manufactured for use in a heat pump system or a compressor, respectively. Particles are added to a base fluid forming the basis of the refrigerant fluid or lubricating fluid. In preferred embodiments the refrigerant or lubricating fluid is formed according to the particulars as mentioned above in connection with the apparatus. Full reference is made to the above and below in each aspect individually or in combination. In particular the base fluid is a refrigerant fluid or lubricating fluid that has refrigerating function or lubricating function when used without particles. Adding particles to the lubricating or refrigerant fluid adds additional properties and/or characteristics to the base fluid as mentioned above and below.

Reference is made in detail to a preferred embodiment of the invention, an example of which is illustrated in the accompanying figure, which shows:

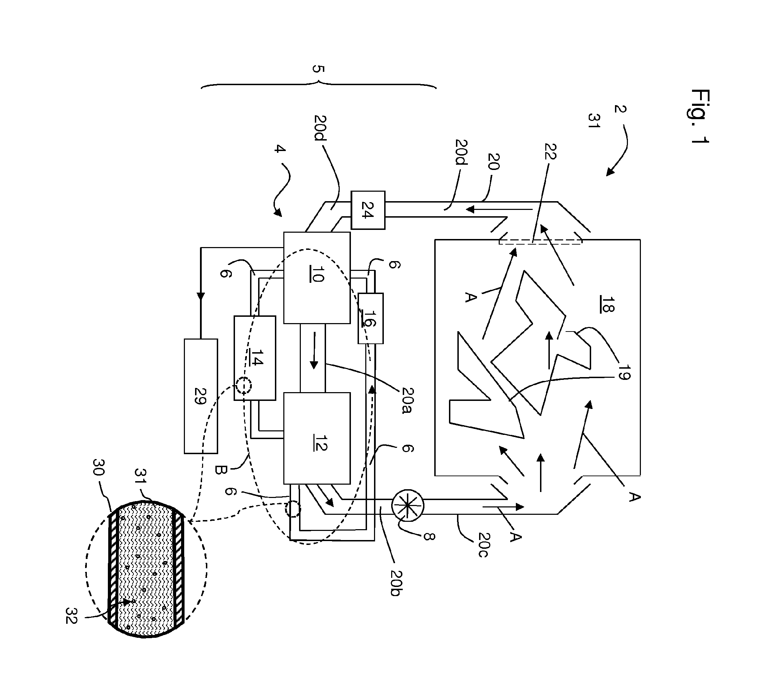

- Fig. 1: a schematic view of a dryer with a heat pump system using a refrigerant with particles as shown in an enlarged cross section view of a refrigerant pipe.

Fig. 1 depicts in a schematic representation a home appliance 2, which in this embodiment is a heat pump tumble dryer. The tumble dryer comprises a heat pump system 4, including in a closed refrigerant loop 6 in this order of refrigerant flow B: a first heat exchanger 10 acting as evaporator for evaporating the refrigerant and cooling process air, a compressor 14 , which can be a variable speed compressor, a second heat exchanger 12 acting as condenser for cooling the refrigerant 31 and heating the process air, and an expansion device 16 from where the refrigerant 31 is returned to the first heat exchanger 10. Together with the refrigerant pipes 30 connecting the components of the heat pump system 4 in series, the heat pump system forms the refrigerant loop 6 through which the refrigerant 31 is circulated by the compressor 14 as indicated by arrow B. The main components of the heat pump system 4 are arranged in a base section 5 or basement of the dryer 2. Further in the base section 5 a condensate collector 29 is arranged to collect water condensed at the first heat exchanger 10 during operation and process air dehumidifying.

The expansion device 16 is a controllable valve that operates under the control of a control unit to adapt the flow resistance for the refrigerant 31 in dependency of operating states of the heat pump system 4. In alternative embodiments the expansion device 16 can be a capillary tube, a valve with fixed expansion cross-section, a throttle valve with variable cross section that automatically adapts the expansion cross-section in dependency of the refrigerant pressure (e.g. by elastic or spring biasing), a semi-automatic throttle valve in which the expansion cross-section is adapted in dependency of the temperature of the refrigerant (e.g. by actuation of a thermostat and/or where the temperature of the refrigerant is taken at a predefined one of the components, in thermal contact with the refrigerant.

The process air flow A within the home appliance 2 is guided through a compartment 18 of the home appliance 2, i.e. through a compartment 18 for receiving articles to be treated, e.g. a rotatable drum 18. The articles to be treated are textiles, laundry 19, clothes, shoes or the like. In the embodiment here these are preferably textiles, laundry or clothes. The process air flow is indicated by arrows A in the Figure and is driven by a process air blower 8.

Preferably the process air flow forms a substantially closed loop, however also a vented heat pump dryer can implement the present invention. The process air channel 20 guides the process air flow A outside the drum 18 and includes different sections, including the section forming the battery channel 20a in which the first and second heat exchangers 10, 12 are arranged. The process air exiting the second heat exchanger 12 flows into a rear channel 20b in which the process air blower 8 is arranged. The air conveyed by blower 8 is guided upward in a rising channel 20c to the backside of the drum 18. The air exiting the drum 18 through the drum outlet (which is the loading opening 46 of the drum) is filtered by a first fluff filter 22 arranged close to the drum outlet in or at a front channel 20d. Then the process air flows through a second fluff filter 24 arranged close to the first heat exchanger 10. The first and second fluff filters 22, 24 are arranged in the front channel 20d forming another section of channel 20 which is arranged behind and adjacent the front cover of the dryer 2. The fluff filter compartment houses the second fluff filter 24 and is covered by a filter door.

According to the invention and as shown in an enlarged cross section view of a channel or pipe 30 of the refrigerant loop 6, a preferred refrigerant 31 is a fluid comprising small particles 32, especially nano-particles. The particles 32 have a size of less than 10 micron.

According to another aspect of the invention, the compressor 14 is provided with a lubricating fluid, wherein the lubricating fluid comprises particles, in particular particles having a size of less than 10 micron.

In particular, the particles 32 provide better heat absorbance/release and heat exchange efficiency of the refrigerant 31.

The refrigerant 31 comprising the particles 32 can be in a state that the particles 32 cannot settle in a manner that the pipe 30 is becoming plugged. According to one embodiment, there are provided functions like steady operation of the compressor 14 in reduced mode or in intervals to keep the refrigerant 31 in a flowing state to avoid settling of the particles.

A control unit not shown in the Figure serves for controlling the functions and components of the apparatus. In particular such control unit can provide functionality to avoid sedimentation of the particles 32 if necessary at all.

Other types of refrigerant loops, heat exchangers or flow channels for process air, cooling air or refrigerant can be implemented, too. In particular, any type of home appliance having a heat exchanger can be provided with such particles in the refrigerant or in a lubricating fluid in one of its components.

Individual components or group of components shown and described for the above embodiments can be combined among each other in any convenient way.

### Reference Numeral List:

- 2: tumble dryer
- 4: heat pump system
- 5: base section
- 6: refrigerant loop
- 8: blower
- 10: first heat exchanger (condenser)
- 12: second heat exchanger (evaporator)
- 14: compressor
- 16: expansion device
- 18: drum (laundry compartment)
- 19: laundry
- 20: process air channel
- 20a: battery channel
- 20b: rear channel
- 20c: rising channel
- 20d: front channel
- 22: first fluff filter
- 24: second fluff filter
- 29: condensate collector
- 30: pipe
- 31: refrigerant
- 32: particles

- A: process air flow
- B: refrigerant flow

## Claims

1. Apparatus comprising a heat pump system (4) comprising:
a first heat exchanger (12) for cooling a refrigerant fluid (R),
a second heat exchanger (10) for heating the refrigerant fluid (R),
an expansion device (16),
a refrigerant loop (6), in which the refrigerant fluid is circulated through the first and second heat exchangers and the expansion device, and
a compressor (14) for circulating the refrigerant fluid through the refrigerant loop,
**characterized in that**
the refrigerant fluid (31) comprises particles (32) having a size of less than 10 micron,
and/or
the compressor is provided with a lubricant fluid, wherein the lubricant fluid comprises particles (32) having a size of less than 10 micron.

2. Apparatus according to claim 1, wherein the particles have a size or have an average size of less than 2500 nm, less than 500 nm, or less than 100 nm.

3. Apparatus according to claim 1 or 2, wherein the particles have a size or have an average size of at least or more than 0.1 nm, 1 nm, 10 nm or 100 nm.

4. Apparatus according to claim 1, 2 or 3, wherein the lubricant fluid is lubricant oil comprising at least one of the following:
Mineral Oil (MO), Polyalphaolefins (PAO), Alkylbenzene (AB), Polyol Esters (POE), Paolyalkilene Glycols (PAG), Mineral naphtenic, Mineral paraffinic, Esters, Diesters,.

5. Apparatus according to any of the previous claims, wherein the refrigerant fluid (R) is or comprises:
Hydrochlorofluorocarbons (HCFC); Chlorofluorocarbons (CFC); Hydrofluorocarbons (HFC); Hydro-fluoro-olefine (HFO), a tetra-fluoro-propene; 1,1,1,2-tetra-fluoro-propene; 1,1,1,3-tetra fluoro-propene; Ammonia; Carbon dioxide; Water; Glycols; Hydrocarbons; or a mixture of at least two of these refrigerant fluids.

6. Apparatus according to any of the previous claims, wherein at least a portion or all of the particles (32) are made of at least one of or comprise at least one of:
transition metal element, transition metal oxide, metal oxide, non-metal oxide, non-metal element, or a particle mixture thereof or are made of a compound material thereof.

7. Apparatus according to any of the previous claims, wherein at least a portion of the particles (32) is formed by at least one of or comprise at least one of carbide or fullerene derivates.

8. Apparatus according to any of the previous claims, wherein a concentration of the particles (32) in the refrigerant and/or lubricating fluid is equal to or less than 75%, 50%, 10%, 1%, or 0.1%.

9. Apparatus according to any of the previous claims, wherein concentration of the particles (32) in the refrigerant and/or lubricating fluid is equal or greater than 0.05%, 0.1%, 1%, or 10%.

10. Apparatus according to any of the previous claims, wherein the particles (32) are dispersed in the refrigerant and/or lubricating fluid in a stable manner, or the particles are dispersed in the refrigerant and/or lubricating fluid such that the base fluid or the fluid with particles (32) is thixotropic or an emulsion.

11. Apparatus according to any of the previous claims, wherein the apparatus is operating with a process medium which exchanges heat with the refrigerant liquid, and wherein the second heat exchanger (10) is thermally coupled to the process medium for cooling down the process medium.

12. Apparatus according to any of the previous claims, wherein the apparatus is operating with a process medium which exchanges heat with the refrigerant fluid, and the first heat exchanger (12) is thermally coupled to the process medium for heating up the process medium.

13. Apparatus according to claim 11 or 12,
wherein the process medium is air, drying air, cooling air, water, washing liquid, laundry washing liquid, dishwasher liquid, or
wherein the first and second heat exchanger (12, 10) are arranged in a drying air circuit.

14. Apparatus according to any of the previous claims, wherein the apparatus is a refrigerator, is an air conditioner, is a dishwasher, is a household appliance (2) having drying function, is a laundry treatment apparatus, is a tumble dryer, is a washing machine, is a washer dryer, is a heat pump system for recovery of process heat, or is a heat pump system for heating a building.

15. Use of particles in a heat exchange medium or in a refrigerant fluid (R), in a heat pump system of a household appliance (1), a refrigerator, an air conditioner, a tumble dryer, a washing machine, a dishwasher or a washer dryer.

16. Method of providing a refrigerant fluid and/or a lubricant fluid, wherein the refrigerant fluid is adapted for use in a heat pump system and the lubricant fluid is adapted for use in a compressor of a heat pump system, in particular according to any of the previous claims 1 to 15, the method comprising the steps of:
providing a base fluid (31) of the refrigerant fluid and/or providing a base fluid (31) of the lubricant fluid,
providing particles (32) having a size of less than 10 micron, and
dispersing the particles in the base fluid.

17. Method of providing a heat pump system having a refrigerant fluid comprising:
providing a refrigerant fluid according to claim 16, and
filling the refrigerant fluid into a refrigerant loop of the heat pump system.

18. Method of providing a compressor having a lubricating fluid comprising:
providing a lubricating fluid according to claim 16, and
filling the compressor with the lubricating fluid.
